# EUROPEAN PATENT APPLICATION

(11) **EP 4 641 520 A1**
(43) Date of publication of application: **29.10.2025**
(21) Application number: 24172431.9
(22) Date of filing: 25.04.2024
(51) Int. Cl.: G06V 10/82, G06V 20/56

(54) **METHODS AND SYSTEMS FOR DATA ACQUISITION FOR THE DEVELOPMENT OF AUTOMATED DRIVING SYSTEMS**

(71) Applicant: Zenseact AB, 417 56 Göteborg (SE)
(72) Inventor: HESS, Georg, 412 79 Göteborg (SE); TONDERSKI, Adam, 426 53 Västra Frölunda (SE); LJUNGBERGH, William, 414 78 Göteborg (SE)
(74) Representative: Zacco Sweden AB

(57) **Abstract**

The present disclosure relates to, among other things, a computer-implemented method (100) performed in a vehicle. The method (100) comprising: obtaining (5102) a set of sensor data frames depicting a scene in a surrounding environment of the vehicle from at least two points-of-view; forming (S108) a learned scene representation of the depicted scene, based on the obtained set of sensor data frames, wherein the learned scene representation is a multidimensional representation of the depicted scene; and transmitting (5110) information indicative of the learned scene representation to a remote server for subsequent rendering of sensor data frames based on the learned scene representation.

## Description

### TECHNICAL FIELD

The herein disclosed technology relates to the field of autonomous driving. In particular, but not exclusively, the herein disclosed technology relates to methods and systems for acquiring data for development of an automated driving system.

### BACKGROUND

During the last few years, the research and development activities related to autonomous vehicles have exploded in number and many different approaches are being explored. An increasing portion of modern vehicles has advanced driver-assistance systems (ADAS) to increase vehicle safety and more generally road safety. ADAS - which for instance may be represented by adaptive cruise control (ACC), collision avoidance systems, forward collision warning, lane support systems, etc. - are electronic systems that may aid a vehicle driver while driving. Today, there is ongoing research and development within a number of technical areas associated to both the ADAS and the Autonomous Driving (AD) field. ADAS and AD may also be referred to under the common term Automated Driving System (ADS), which for the purpose of the present disclosure, is considered to correspond to all of the different levels of automation as for example defined by the SAE J3016 levels 1- 5 of driving automation.

The successful development and deployment of ADS heavily relies on the availability and quality of data. In fact, data from real-life scenarios is critical in a data-driven development organization where the ADS performance scales with amount of data collected. This data is used by the ADS to perceive its environment, make decisions, and act accordingly. In the development, it is therefore used in the training, evaluation and debugging of the ADS.

This data is typically collected from a fleet of vehicles (e.g. test vehicles, production vehicles or customer vehicles), as these generate huge amounts of sensor-related data as they are driven around. This entails triggering on interesting scenarios, storing the raw data in the vehicle, and uploading said data to a centralized server. However, any data collection, such as accessing the data from the entire fleet of vehicles, and transmitting the data to the centralized server is very costly and technically challenging due to storage limitations, bandwidth limitations, and the immense need of post-processing to extract the relevant datasets for each individual use-case. In this respect, techniques for compressing the raw sensor data, or only uploading a subset of the data, has been employed, to reduce the amount of data to be uploaded. However, this comes with the drawback of losing information in the decompression, or being limited by only having a subset of data available. There is therefore a need for new and improved solutions for dealing with these aspects.

### SUMMARY

The herein disclosed technology seeks to mitigate, alleviate or eliminate one or more of the aboveidentified deficiencies and disadvantages in the prior art to address various problems relating to technical constraints (bandwidth limitations, storage limitations, etc.) in the collection of data from a fleet of vehicles for the development of an automated driving system, ADS.

The inventors have realized a new and improved way of performing data acquisition in vehicles, which can be used in the development of autonomous driving systems. It is at least partly based on an idea that instead of collecting and transmitting raw sensor data, or a compression of the raw sensor data, a multi-dimensional scene representation can be learned in the vehicle, and instead used as means for transmitting the relevant data. In addition to offering a much more compressed data form than raw sensor data, it also offers added value to the collected data, and enables new capabilities.

Various aspects and embodiments of the disclosed technology are defined below and in the accompanying independent and dependent claims.

According to a first aspect of the disclosed technology, there is provided a computer-implemented method performed in a vehicle. The method comprises obtaining a set of sensor data frames depicting a scene in a surrounding environment of the vehicle from at least two points-of-view. The method further comprises forming a learned scene representation of the depicted scene, based on the obtained set of sensor data frames. The learned scene representation is a multidimensional representation of the depicted scene. The method further comprises transmitting information indicative of the learned scene representation to a remote server for subsequent rendering of sensor data frames based on the learned scene representation.

According to a second aspect of the disclosed technology, there is provided a computer program product comprising instructions which, when the program is executed by a computing device, causes the computing device to carry out the method according to any one of the embodiments of the first aspect disclosed herein. With this aspect of the disclosed technology, similar advantages and preferred features are present as in the other aspects.

According to a third aspect of the disclosed technology, there is provided a (non-transitory) computer-readable storage medium comprising instructions which, when executed by a computing device, causes the computing device to carry out the method according to any one of the embodiments of the first aspect disclosed herein. With this aspect of the disclosed technology, similar advantages and preferred features are present as in the other aspects.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

According to a fourth aspect of the disclosed technology, there is provided a computing device. The computing device comprises control circuitry configured to obtain a set of sensor data frames depicting a scene in a surrounding environment of a vehicle from at least two points-of-view. The control circuitry is further configured to form, based on the set of sensor data frames, a learned scene representation of the depicted scene. The learned scene representation is a multidimensional representation of the depicted scene. The control circuitry is further configured to transmit information indicative of the learned scene representation to a remote server for subsequent use of the learned scene representation in reconstructing one or more sensor data frames of the obtained set of sensor data frames and/or rendering of new sensor data frames. With this aspect of the disclosed technology, similar advantages and preferred features are present as in the other aspects.

According to a fifth aspect, there is provided a vehicle comprising one or more sensors, and the computing device according to any one of the embodiments of the fourth aspect. With this aspect of the disclosed technology, similar advantages and preferred features are present as in the other aspects.

According to a sixth aspect, there is provided a system. The system comprises a fleet of vehicles, and a server. A vehicle of the fleet of vehicles comprises control circuitry configured to obtain a set of sensor data frames depicting a scene in a surrounding environment of a vehicle from at least two points-of-view. The control circuitry of the vehicle is further configured to form, based on the set of sensor data frames, a learned scene representation of the depicted scene. The learned scene representation is a multidimensional representation of the depicted scene. The control circuitry of the vehicle is further configured to transmit information indicative of the learned scene representation to the server. The server comprises control circuitry configured to receive the information indicative of the learned scene representation from the vehicle. The control circuitry of the server is further configured to form the learned scene representation based on the received information. The control circuitry of the server is further configured to render sensor data frames pertaining to the surrounding environment, based on the learned scene representation. With this aspect of the disclosed technology, similar advantages and preferred features are present as in the other aspects.

The disclosed aspects and preferred embodiments may be suitably combined with each other in any manner apparent to anyone of ordinary skill in the art, such that one or more features or embodiments disclosed in relation to one aspect may also be considered to be disclosed in relation to another aspect or embodiment of another aspect.

An advantage of some embodiments is that collection of data from ADS equipped vehicles is rendered more efficient and cost effective.

An advantage of some embodiments is that the data collection from ADS equipped vehicles is rendered more bandwidth-efficient, in terms of more compressed data being transmitted.

An advantage of some embodiments is that it can provide for a balance between transmitting raw sensor data which is associated with high bandwidth requirements, and transmitting highly compressed sensor data which is associated with information losses due to compression/decompression.

An advantage of some embodiments is that it can provide for new possibilities by compressing the scene as such, rather than individual sensor data. This can leverage the shared information between sensors, and within sequences of sensor data frames, to achieve a dense information representation, which still maintains a high amount of information. In addition, added value can be provided to the collected data by enabling not just the original sensor data to be reconstructed, but also the rendering of novel viewpoints within the scene.

Further embodiments are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

These and other features and advantages of the disclosed technology will in the following be further clarified with reference to the embodiments described hereinafter.

### BRIEF DESCRIPTION OF THE DRAWINGS

The above aspects, features and advantages of the disclosed technology, will be more fully appreciated by reference to the following illustrative and non-limiting detailed description of example embodiments of the present disclosure, when taken in conjunction with the accompanying drawings, in which:
Figure 1 is a schematic flowchart representation of a method performed in a vehicle in accordance with some embodiments.
Figure 2 is a schematic flowchart representation of a method performed by a system in accordance with some embodiments.
Figure 3 is a schematic illustration of a system in accordance with some embodiments.
Figure 4 illustrates a computing device in accordance with some embodiments.
Figure 5 is a schematic illustration of a vehicle in accordance with some embodiments.

### DETAILED DESCRIPTION

The present disclosure will now be described in detail with reference to the accompanying drawings, in which some example embodiments of the disclosed technology are shown. The disclosed technology may, however, be embodied in other forms and should not be construed as limited to the disclosed example embodiments. The disclosed example embodiments are provided to fully convey the scope of the disclosed technology to the skilled person. Those skilled in the art will appreciate that the steps, services and functions explained herein may be implemented using individual hardware circuitry, using software functioning in conjunction with a programmed microprocessor or general-purpose computer, using one or more Application Specific Integrated Circuits (ASICs), using one or more Field Programmable Gate Arrays (FPGA) and/or using one or more Digital Signal Processors (DSPs).

It will also be appreciated that when the present disclosure is described in terms of a method, it may also be embodied in apparatus comprising one or more processors, one or more memories coupled to the one or more processors, where computer code is loaded to implement the method. For example, the one or more memories may store one or more computer programs that causes the apparatus to perform the steps, services and functions disclosed herein when executed by the one or more processors in some embodiments.

It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative.

It will also be understood that, although the term first, second, etc. may be used herein to describe various elements or features, these elements should not be limited by these terms. These terms are only used to distinguish one element from another. For example, a first element could be termed a second element, and, similarly, a second element could be termed a first element, without departing from the scope of the embodiments. The first element and the second element are both elements, but they are not the same element.

### Overview

An imperative aspect of achieving reliable Automated Driving System (ADS) functionality for the vehicles of tomorrow is the availability and quality of sufficient amounts of relevant data. For example, the unpredictable and dynamic scenarios including situations, events or objects in the surrounding environment of the vehicle and on the roads on which the vehicle is travelling can involve nearly endless varieties and complexities. In order to handle this, there is a need for immense amounts of data (i.e. sensor data logged by vehicles) for achieving reliable autonomous functionality.

However, some of the challenges with collecting data from a fleet of vehicles for the purpose of testing, developing, and verifying ADS functions is that simply transmitting all of the data is unfeasible due to the immense need of bandwidth and transmission resources, and also due to the insurmountable post-processing task required to extract relevant data samples. Various aspects and embodiments disclosed herein aim to provide a solution to easily and effectively, acquire data for the development of the ADS. To this end, the herein disclosed technology proposes a solution which leverages the learning of a multidimensional scene representation from a set of sensor data frames.

Data collected by several different sensors of a vehicle, and over time, contains a lot of redundancy, both temporally (i.e. seeing the same static location in multiple images or LiDAR point clouds) and across sensors (e.g. an image collected by a camera seeing the same thing as a point cloud generated by a LiDAR). Traditional data compression techniques primarily focus on eliminating redundancy within a sequence of frames, such as consecutive images in a video. However, these methods do not capitalize on the shared information present when the same object is observed from various perspectives, nor do they harness the overlapping information captured by different sensors, such as cameras and LiDARs, which may simultaneously record different aspects of the same scene. Essentially, the conventional techniques miss the opportunity to achieve a more streamlined and efficient compression by not integrating information across different viewpoints (or points-of-view) and sensor modalities. At a core of the proposed solution is leveraging this shared information in the forming of a multidimensional scene representation of a scene depicted by a set of sensor data frames. The scene representation can then be utilized as a compression of the set of sensor data frame, as it enables subsequent rendering of sensor data frames at a different entity (e.g. a centralized server). The rendering can either be a reconstruction of the original sensor data frames (i.e. the set of sensor data frames based on which the scene representation was formed), or a construction of novel sensor data frames, e.g. from viewpoints other than those of the original sensor data frames. The latter case offering added value in the form of new possibilities for the vehicle data collection process, which is not achievable with previous techniques.

To some extent, the disclosed technology leverages so-called Neural Radiance Fields, NeRF, or NeRF-like algorithms, for representing the scene. NeRFs is one example of a way of offering a representation that is learnable (through backpropagation), which can describe a multidimensional scene, and be used with a rendering process. NeRFs has previously been used to generate novel views in a represented scene. However, it has not been used in the context of data collection and in a distributed manner as proposed herein, as means for data compression. This, among other things, will be further elaborated upon as part of some embodiments of the herein disclosed technology.

### Definitions

In the present context, an "Automated Driving System" ("ADS") refers to a complex combination of hardware and software components designed to control and operate a vehicle without direct human intervention. ADS technology aims to automate various aspects of driving, such as steering, acceleration, deceleration, and monitoring of the surrounding environment. The primary goal of an ADS is to enhance safety, efficiency, and convenience in transportation. An ADS can range from basic driver assistance systems to highly advanced autonomous driving systems, depending on its level of automation, as classified by standards like the SAE J3016. These systems use a variety of sensors, cameras, radar, lidar, and powerful computer algorithms to perceive the environment and make driving decisions. The specific capabilities and features/functions of an ADS can vary widely, from systems that provide limited assistance to those that can handle complex driving tasks independently in specific conditions.

Advanced Driver Assistance Systems (ADAS) are technologies that assist drivers in the driving process, though they do not necessarily offer full autonomy. ADAS features often serve as building blocks for ADS. Examples include adaptive cruise control, lane-keeping assist, automatic emergency braking, and parking assistance. They enhance safety and convenience but typically require some level of human supervision and intervention. On the other hand, Autonomous Driving (AD) are technologies that are designed to control and navigate a vehicle without human supervision. Accordingly, it can be said that the distinction between ADAS and AD lies in the level of autonomy and control. ADAS systems are designed to aid and support drivers, while an AD aims to take full control of the vehicle without requiring constant human oversight. AD accordingly aims for higher levels of autonomy (such as Levels 4 and 5, according to the SAE International standard), where the vehicle can operate independently in most or all driving scenarios without human intervention. As mentioned in the foregoing, the term "ADS" in used herein as an umbrella term encompassing both ADAS and AD. An ADS function or ADS feature may in the present context be understood as a specific function or feature of the entire ADS stack, such as e.g., a Highway Pilot feature, a Traffic-Jam pilot feature, a path planning feature, and so forth.

In the present context, a "sensor" or "sensor device" refers to a specialized component or system that is designed to capture and gather information from the vehicle's surroundings. It may further refer to components for gathering information of the vehicle itself. These sensors play a crucial role in enabling the ADS to perceive and understand their environment, make informed decisions, and navigate safely. Sensors are typically integrated into the autonomous vehicle's hardware and software systems to provide real-time data for various tasks such as obstacle detection, localization, road model estimation, and object recognition. Common types of sensors used in autonomous driving include LiDAR (Light Detection and Ranging), Radar, Cameras, Ultrasonic sensors, inertial measurement unit (IMU), GPS, wheel speed sensors etc. LiDAR sensors use laser beams to measure distances and create high-resolution 3D maps of the vehicle's surroundings. Radar sensors use radio waves to determine the distance and relative speed of objects around the vehicle. Camera sensors capture visual data, allowing the vehicle's computer system to recognize traffic signs, lane markings, pedestrians, and other vehicles. Ultrasonic sensors use sound waves to measure proximity to objects. Various machine learning algorithms (such as e.g., artificial neural networks) may be employed to process the output from the sensors to make sense of the environment.

In the present context, the wording "sensor data frame" refers to sensor data captured by a certain sensor (i.e. sensor data of a certain sensor data type), at a certain time instance. The sensor data frame may also be referred to as "sensor data sample".

More specifically, the sensor data frame may be interpreted as a specific instance of data collected by the sensors installed on a vehicle at a particular moment in time or within a specific timeframe. The sensor data frames typically comprise various types of information captured by the sensors, such as camera images, lidar output, radar output, GPS coordinates, accelerometer readings, or other sensorgenerated data. The sensor data frames may include connected meta data (e.g., timestamps, location information, vehicle information, log duration, etc.). A sensor data frame may e.g. correspond to an image frame from a camera, or a lidar point-cloud for a certain point in time. For example, a sensor data frame may be an image captured by a camera at a time instance T1. Another sensor data frame may be a point cloud captured by a LiDAR sensor at the same time instance T1, or at another time instance T2. Yet another sensor data frame may be an image captured by the camera at the time instance T2, or by another camera at the time instance T1. A set of sensor data frames, as referred to in the following, may thus comprise a number of sensor data frames captured by one or more sensors, at one or more time instances.

The wording "network", e.g. as in "neural network" (may also be referred to as machine-learning algorithm, machine learning model, (artificial) neural network, deep learning network and so forth) herein refers to any computational system or algorithm that is trained on data to make predictions, decisions or otherwise generate an output, e.g. by learning patterns and relationships from training data and applying that knowledge on new input data.

Neural networks, or artificial neural networks, emulate computing systems inspired by biological neural networks found in the brains of living creatures. These systems exhibit learning capabilities, progressively enhancing their performance without requiring task-specific programming. For instance, in image recognition, a neural network can be trained to detect specific objects within images by analyzing labelled example images. Once it grasps the correlation between objects and their names, it can apply this knowledge to identify similar objects in unlabeled images.

Neural networks typically comprise a plurality of layers of neurons, and each neuron may represent a mathematical operation which is applied to the input data. Typically, the machine learning model comprises an input layer, one or more hidden layers, and an output layer. The first layer may be referred to as the input layer. The output of each layer (except the output layer) in the network may be fed to a subsequent layer, which in turn produces a new output. The new output may be fed to a further subsequent layer. The output of the network may be an output of the output layer. The process may be repeated for all layers in the network. Typically, each layer further comprises an activation function. The activation function may further define the output of a neuron of the layer. For example, the activation function may ensure that the output from a layer is not too large or too small (e.g., tending towards positive or negative infinity). Further, the activation function may introduce non-linearity into the network. Different activation functions can be used, such as continuous activation function (e.g. sigmoid), or partially continuous activation functions (e.g. ReLU). During the training process, weights and/or biases associated with the neurons of the layers may be adjusted until the network may produce predictions for the input training data that reflect a ground truth. Each neuron may be configured to multiply the input to the neuron with a weight associated with that neuron. Each neuron may be further configured to add a bias associated with that neuron to the input. Put differently, an output from a neuron may be a sum of the bias associated with the neuron and a product of the weight associated with the neuron and the input. The weights and biases may be adjusted in a recursive process and/or an iterative process. This may be known as backpropagation within the art

Moreover, during the training of a neural network, regression-comprised of statistical processes for understanding variable relationships-can involve minimizing a cost function. This function gauges the network's performance in accurately linking training examples to their intended outputs. The technique called backpropagation can then be employed. Backpropagation, a widely used method for training artificial neural networks, collaborates with optimization methods like stochastic gradient descent (SGD).

Moreover, use of backpropagation can include propagation and weight update. Backpropagation involves two key steps: propagation and weight adjustment. When an input enters the neural network, it moves forward through each layer until it reaches the output layer. Here, the neural network's output is measured against the desired output using a cost function, generating an error value for each output node. These errors then flow backward, starting from the output layer, assigning error values to each node based on its contribution to the final output. These error values are pivotal-they aid in computing the cost function's gradient concerning the neural network's weights. This gradient guides the selected optimization technique, adjusting the weights to minimize the cost function.

As used herein, the term "in response to" may be construed to mean "when or "upon" or "if" depending on the context. Similarly, the phrase "in response to [determining at least one of the one or more scenario triggers] being fulfilled" may be construed to mean "when it is determined that at least one scenario trigger is fulfilled" or "in an instance of fulfilment of at least one scenario trigger" "upon determining a fulfilment of at least one scenario trigger" or "upon detecting and identifying occurrence of an event fulfilling at least one scenario trigger" or "in response to detecting occurrence of an event fulfilling at least one scenario trigger", depending on the context.

### Embodiments

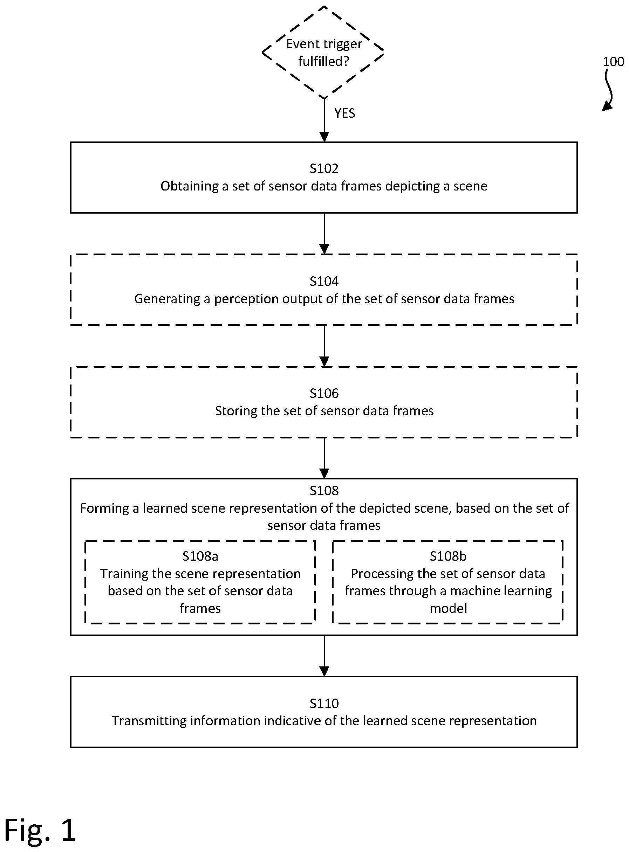

Figure 1 illustrates a schematic flowchart representation of a method 100 in accordance with some embodiments. More specifically, a method 100 for data acquisition, or collection, for development of an automated driving system. For example, the acquired data can be annotated, and used in training or testing of a machine learning model used as part of the ADS.

The method 100 is preferably a computer-implemented method, performed by a processing system of a vehicle. The vehicle may be a vehicle equipped with an ADS. The processing system may for example comprise one or more processors and one or more memories coupled to the one or more processors, wherein the one or more memories store one or more programs that perform the steps, services and functions of the method 100 disclosed herein when executed by the one or more processors. It is however to be appreciated that the steps of the method may be distributed over two or more processing systems, such as between a vehicle and a server (may also be referred to as remote server, cloud server, central (or centralized) server, back-office server, fleet server, or back-end server), which will be further elaborated upon herein.

Below, the different steps of the method 100 are described in more detail. Even though illustrated in a specific order, the steps of the method 100 may be performed in any suitable order as well as multiple times. Thus, although Fig. 1 may show a specific order of method steps, the order of the steps may differ from what is depicted. In addition, two or more steps may be performed concurrently or with partial concurrence. Such variation will depend on the software and hardware systems chosen and on designer choice. All such variations are within the scope of the invention. Likewise, software implementations could be accomplished with standard programming techniques with rule-based logic and other logic to accomplish the various steps. Further variants of the method 100 will become apparent from the present disclosure. The herein described embodiments are only given as examples and should not be limiting to the present invention. Other solutions, uses, objectives, and functions within the scope of the invention as claimed below described patent claims should be apparent for the person skilled in the art. It should be appreciated that the steps which are comprised in dashed lines in Fig. 1 are examples of a number of optional steps which may form part of a number of alternative embodiments. The optional steps need not be performed in order. Furthermore, it should be appreciated that not all of the optional steps need to be performed.

The method comprises obtaining S102 a set of sensor data frames depicting a scene in a surrounding environment of the vehicle from at least two points-of-view. In other words, the set sensor data frames may have at least two different perspectives of the scene. The set of sensor data frames may comprise one or more of image data, LiDAR data, radar data, and ultrasonic data. The set of sensor data frames may comprise sensor data frames of just one sensor data type. For example, the set of sensor data frames may comprise a set of images captured by one or more cameras, or a set of point-clouds captured by one or more LiDAR sensors. However, in some embodiments, the set of sensor data frames may comprise sensor data frames corresponding to two or more sensor data types. As an example, the set of sensor data frames may comprise both a number of images, and a number of point-clouds. Using just one sensor data type may allow for more streamlined processing of the data, whereas using a combination of sensor data types may provide more knowledge about the environment which can be valuable in later steps.

A sensor data frame, of the set of sensor data frames may comprise both data depicting the surrounding environment, as well as associated meta data. The meta data may e.g. comprise timestamps, location information, vehicle information, log duration, etc. The meta data may further comprise intrinsic and/or extrinsic parameters of the sensor having captured a sensor data frame.

The set of sensor data frames is captured by one or more sensors of the vehicle. In some embodiments, obtaining S102 the set of sensor data frames comprises collecting the sensor data frames from a sensor data stream that is output from the one or more sensors of the vehicle. The stream of sensor data may be continuously generated as the vehicle drives. The sensor data frames may thus be obtained by sampling the stream of sensor data. In another example, the sensor data frames are retrieved from a storage or data buffer in which the sensor data frames are stored. The data buffer may be of a suitable size or length depending on specific realizations. In more detail, the sensor data buffer may be of any size deemed suitable, e.g. in consideration of data capacity restraints and/or characteristics of the sensor data frames, and may for instance range from under a second up to several minutes, or more preferred, from a few seconds up to less than a minute. For example, the data buffer may be configured to store 5 to 20 seconds of the sensor data stream (that is sampled with a set sample rate such as e.g., 10 Hz, 20 Hz, 30 Hz, 40 Hz, etc.), in a First-In First-Out (FIFO) arrangement. However, in some embodiments the data buffer may be configured to store between 30 seconds and 60 seconds of the sensor data stream. This may provide the advantage of being able to capture an entire scenario's development over time.

In general, the term "obtaining" as used herein, is to be interpreted broadly and encompasses receiving, retrieving, collecting, acquiring, and so forth directly and/or indirectly between two entities or components configured to be in communication with each other or further with other external entities. However, in some embodiments, the term "obtaining" is to be construed as determining, deriving, forming, computing, etc.

The surrounding environment of a vehicle is to be understood as a general area around the vehicle in which objects (such as other vehicles, landmarks, obstacles, etc.) can be detected and identified by vehicle sensors (radar, LiDAR, cameras, etc.), i.e. within a sensor range of the vehicle. In the present context, a "scene" refers to the dynamic environment surrounding the vehicle at a specific moment in time. It may encompass dynamic elements, such as other vehicles, pedestrians, cyclists, animals, or any other road users, static elements such as road infrastructure (e.g., traffic signs, traffic lights, lanes), surrounding buildings or other infrastructure, obstacles, as well as environmental conditions (e.g., weather, lighting, etc.). The scene is perceived and interpreted by the vehicle's sensors, including cameras, LiDAR, radar, and other onboard systems. The scene may be a static scene. The static scene may be a scene in which all objects are stationary. Alternatively, or in combination, the static scene may be a scene captured for a certain time instance. Alternatively, the scene may be a dynamic scene. In such case, the scene may further be associated with a certain event, or scenario, unfolding across a set of sensor data frames associated with a series of time instances. The event may describe how the different elements depicted in the scene acts, or interacts with each other. The dynamic scene may thus involve moving objects, or associated with a series of time instances.

A point of view (may also be referred to as field of view or viewpoint) associated with a sensor data frame herein refers to a specific perspective or vantage point from which the corresponding sensor has captured the sensor data frame. It can be represented by a spatial position and orientation at which the sensor is positioned relative to a frame of reference. More specifically, each sensor data frame of the set of sensor data frames may be associated with a position within a frame of reference, at a time of capture. The position (and/or orientation) of the sensors may be used to determine a relative spatial difference between different sensors (and sensor data frames captured by said sensors). The position (and/or orientation) may e.g. be obtained through simultaneous localization and mapping (SLAM), GPS, or inertial estimation. Data associated with the position and/or orientation may be included in the meta data associated with the set of sensor data frames, or with each individual sensor data frame.

The frame of reference may be a global reference frame, such as a frame of reference in relation to the surrounding environment. In another example, the frame of reference may be a local reference frame, such as a frame of reference in relation to the vehicle. The point-of-view can describe the field of view, viewing angle, and spatial coverage of the sensor. Sensor data frames having different points-of-view can be achieved by having sensor data frames captured at different points-in-time, since at different points-in-time, either the vehicle has moved to a new position, or the scene around the vehicle has changed, or both. Alternatively, or in combination, the sensor data frames may be captured from different sensors having different points-of-view.

In some embodiments, the set of sensor data frames is obtained in response to a fulfilment of an event trigger. The event trigger may be used as a way of detecting a certain scene or event of interest. Monitoring of the event trigger may thus allow for selecting/detecting which sensor data should be collected. The event trigger may be a set of rules or conditions which can be used to defined a scene of interest.

In general, fulfillment of the scenario triggers may be based on monitoring of external parameters of the surrounding environment or of internal parameters of the vehicle. For example, the event trigger may relate to the detection of an activation of a certain system in the vehicle, such as an emergency brake system, or a collision avoidance system. In another example, the event trigger may relate to the detection of a certain motion of the vehicle (e.g. certain steering maneuvers, motion of the vehicle in the lateral and/or longitudinal direction, etc.). The event trigger may thus be based on sensor data pertaining to the surrounding environment, and/or based on the sensor data as processed by functions of the ADS (such as a perception module). As an example, a scenario trigger may be fulfilled upon detecting brake light of a vehicle in front being activated. In another example, a scenario trigger may be fulfilled upon detecting the presence of certain objects (e.g. pedestrians or other vulnerable road users) ahead of the vehicle. Moreover, the event trigger can be based on a query. More specifically, the vehicle may obtain a query indicative of what type of scenes or events to be collected.

The method 100 further comprises forming S108 a learned scene representation of the depicted scene, based on the obtained set of sensor data frames. Put differently, forming S108 the learned scene representation may be understood as learning (or training) the scene representation to represent the scene depicted in the set of sensor data frames. The scene representation is learnable in the sense that it can be learned, based on the set of sensor data frames, to generate the scene representation for a specific scene depicted by the set of sensor data frames. This can be done through training a set of learnable parameters of the scene representation.

As explained above, the set of sensor data frames may either comprise sensor data frames of one sensor data type, or a combination of different sensor data types. Thus, the learned scene representation may be formed S108 based on sensor data frames of one or more sensor data types. Using just one sensor data type may be advantageous e.g. in that it can provide a more streamlined process, and for achieving a scene representation which is purpose made for representing (and subsequently rendering of) sensor data frames of that particular sensor data type. However, using a combination of sensor data types may provide for more knowledge about the surrounding environment, which can improve the overall accuracy of the scene representation. For example, different sensor data types can provide valuable information of different sorts. LiDAR, for instance, can be used for supervising the geometry more directly, and with higher presicion, compared to extracting this information from camera images. Moreover, LiDAR is robust against sunglare or other light reflections in the scene. Images on the other hand, can better capture information about colors in the scene, and potentially provide for bettery object recognition. Regardless of what sensor data types are used for forming the learned scene representation, the same 3D structure of the scene may still be obtained. From this, different types of information can be extracted, as will be further explained below.

The scene representation should herein be understood as a set of learnable parameters which together describes different physical properties of the scene, such as the geometry, objects, colours, lighting, etc. Put differently, the scene representation can be physically based in such way that it understands and models the underlying physical processes that occurs in the real-world, and how the sensors reflect these in the sensor data (considering e.g. projections, refractions, lenses etc.). This can e.g. be based on characteristics of materials, and modelling how light travels in the environment. Thereby, the scene representation can learn to model geometric aspects, such as positioning, orientation, and scale of 3D models in the scene. It can further model lighting aspects, such as colours, shadows, brightness, and reflections. It can further model transparency and translucency, which described how light passes through different materials like glass or fog.

Some techniques for doing this, which can be referred to as radiance-based techniques, assumes that all points in the space emit light. Other techniques consider the light to have a source, which then reflects in each point, depending e.g. on the surface colour, reflectivity, etc.

Moreover, some techniques for modelling the physical world leverages neural networks. Thus, the scene representation may comprise a neural network. The set of parameters may then be a set of learnable weights of the neural network. It is however to be noted that other techniques for modelling the physical world may be based on other architectures.

Moreover, the learned scene representation is a multidimensional representation of the depicted scene. Put differently, the learned scene representation is a representation of a multi-dimensional scene. The learned scene representation may be a three-dimensional representation of the depicted scene. This is to allow for a subsequent rendering process, as will be further described below. In some embodiments, the learned scene representation has a temporal dimension as a fourth dimension. More specifically, the set of sensor data frames may constitute a sequence of sensor data captured over at least two subsequent points-in-time. The learned scene representation may then be a spatiotemporal representation. By spatiotemporal, it is herein meant spanning over both spatial and temporal dimensions. The spatiotemporal representation may thus be a four-dimensional representation of a dynamic scene.

Learning of the multi-dimensional scene representation is enabled by having the set of sensor data frames captured from different angles (i.e. having different viewpoints) of the scene. By knowing intrinsic and extrinsic parameters of the sensors having captured the set of sensor data frames, and their position and orientation relative each other, and the scene, features identified in the scene can be matched between sensor data frames, to enable the forming of a multi-dimensional representation of the scene. Different techniques for forming this representation by a learning-based approach is available, such as Neural Radiance Fields (or NeRF for short), and 3D Gaussian Splatting. These techniques will be further elaborated upon below. It is however to be noted that other options for constructing the learned scene representation are available as well, both radiance-based and non-radiance based.

A further capability of the learned scene representation is that it is configured to be used in a rendering process, enabled by its multidimensional representation of the scene. More specifically, with the learned scene representation, different views of the scene can be synthesized by rendering the scene from different viewpoints. The synthesized views can be visually realistic and coherent with the original sensor data frames. The learned scene representation can be used to reconstruct one or more of the original sensor data frames, or to render different viewpoints of the scene not previously captured by the original sensor data frames. Thereby, the learned scene representation can enable the creation of immersive virtual environments or accurate reconstructions of real-world scenes. The rendering process may be a differentiable rendering process. Differentiable rendering is a technique in the field of computer vision that involves rendering e.g. an image from a 3D scene representation in a way that allows gradients to be computed with respect to the scene's parameters. This enables end-to-end training of scene representations that models both scene geometry and appearance. The scene representation may thus be a scene representation configured (or enabled) to be used with a differentiable rendering process.

In some embodiments, the learned scene representation is a Neural Radiance Field (NeRF). As the name suggest, NeRF utilizes radiance fields, and is thus a radiance based technique. Moreover, the NeRF is neural based in the sense that it is constructed (at least partly) by neural networks.

A NeRF is a neural network that can reconstruct complex three-dimensional scenes from a partial set of two-dimensional images (or other sensor data types). The NeRF learns the scene geometry, objects, and angles of a particular scene. This can be learned e.g. from how light traverses the scene. Then it can be used in rendering of photorealistic 3D (or 2D) views from different viewpoints, as well as of different sensor data types.

A NeRF is typically constructed of a so-called multilayer perceptron (MLP), which is a fully connected neural network architecture. The network can be trained to map spatial coordinates and viewing directions (e.g. light rays from points in an image) to colour and density values. An MLP uses a series of mathematical structures that organize inputs, such as a position in 3D space or a 2D viewing direction, to determine the color and density values at each point in a 3D image.

A NeRF needs to be trained for each unique scene, using sensor data (e.g. images) from different viewpoints. Also, the sensor position and orientation need to be known, which requires tracking of the sensors. This can e.g. be done through some combination of SLAM, GPS, or inertial measurements. Or it can be done after capture from analyzing of the sensor data, e.g. with the help of a neural network.

The training process of the NeRF can generally be described as follows, in which cameras are used as way of example. For each sparse camera (and image) viewpoint provided, camera rays are traced through the scene, generating a set of 3D points with a given radiance direction (into the camera). For these points, volume density and emitted radiance are predicted using the MLP. The colour along a ray can be weighted together, given the density, to give information about occlusions (i.e. object blocking the light). A rendered image can then be generated through classical volume rendering. The error between the rendered image and the original image can be minimized (e.g. through gradient decent) over multiple viewpoints, encouraging the MLP to develop a coherent model of the scene.

In some examples, the scene representation may be based on Gaussian Splatting. Gaussian splatting is another example of a radiance-based technique. Gaussian Splatting is a volume rendering technique that deals with the direct rendering of volume data without converting the data into surface or line primitives. This technique integrates sparse points produced during camera calibration, representing scenes with 3D (or 4D dynamic) Gaussians which retain properties of continuous volumetric radiance fields.

In such case, the scene representation may comprise a set of Gaussians. The set of learnable parameters may then correspond to position, size, rotation, and spherical harmonics of the Gaussians. The rendering can be done by projecting, also called splatting, the 3D (or dynamic 4D) Gaussians onto an image plane. Then, for each pixel, the algorithm traverses the splatted Gaussians based on their distance to the current camera position, and accumulates their density and color.

Two possible ways for forming S108 the learned scene representation (i.e. learning the scene representation) will in the following be described. In short, the first option is based on a training process of the scene representation, and the second option is based on using a machine learning model (or any form of neural network) trained to predict the scene representation. It is to be appreciated that any combination of the two may be used as well. As an example, a learned scene representation predicted by a machine learning model (in accordance with the second option), may be further improved (e.g. through fine-tuning) by training the initially predicted scene representation in accordance with the first option. Furthermore, other ways of forming S108 the learned scene representation are not excluded.

Forming S108 the learned scene representation may comprise training S108a the learned scene representation on the set of sensor data frames, thereby learning a set of parameters of the learned scene representation. Put differently, this can be described as optimizing parameters of the scene representation for a certain scene depicted in a set of sensor data frames. For example, it may be learned by minimizing differences between rendered sensor data and original sensor data using standard neural network optimization techniques. Thus, the scene representation may be trained S108a (or learned) for a specific scene, and based on the set of sensor data frames depicting said scene.

Forming S108 the learned scene representation may comprise processing S108b the set of sensor data frames through a machine learning model, the machine learning model being trained to process a set of sensor data frames and output a predicted set of parameters for the learned scene representation. Put differently, the learned scene representation can be formed by inputting the set of sensor data frames to the machine learning model, which then outputs predicted values for parameters of the learned scene representation. The machine learning model can e.g. be a model trained to perceive the surrounding environment, such as convolutional neural networks, or recurrent neural networks. In another example, the machine learning model may be a transformer-based network, similar to BERT or GPT. The machine learning model may be trained on large amounts of data to be able to output a desired prediction, based on a certain input. In this case, the input is large amounts of sensor data frames associated with different scenes, and the output is the predicted values for the set of parameters used to define the scene representation for the respective scenes. Examples of machine learning-based prediction of scene representations are known in the art.

As explained above, the scene representation may comprise a set of learnable parameters for defining the represented scene. The scene representation may comprise a neural network. The set of parameters may constitute trainable weights of the neural network.

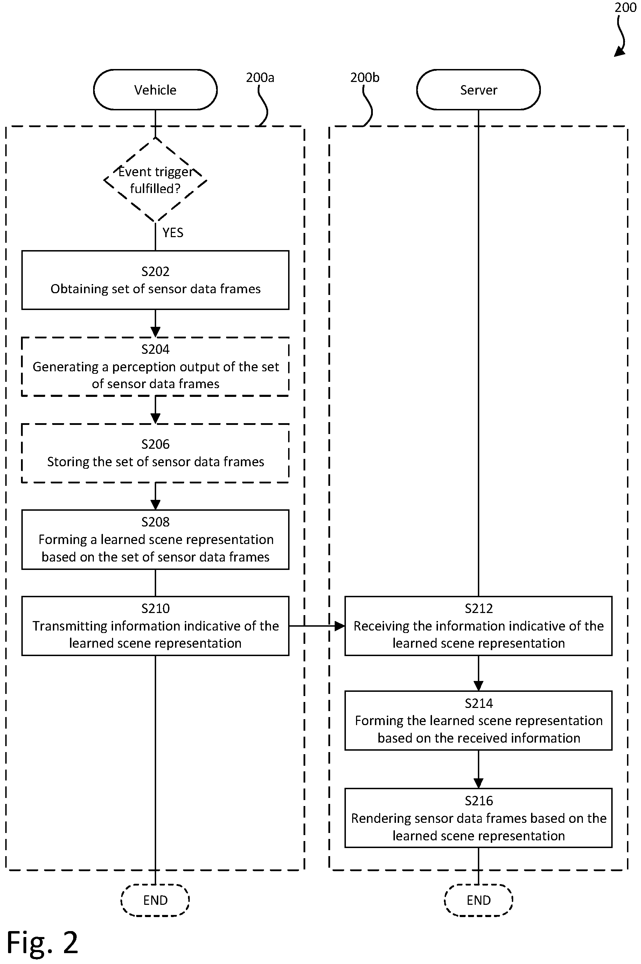

The method 100 further comprises transmitting S110 information indicative of the learned scene representation to a remote server for subsequent rendering of sensor data frames based on the learned scene representation. By rendering, it is herein meant generating sensor-realistic (i.e. true to reality) views. As explained in the foregoing, the learned scene representation is configured to be used in a rendering process. The rendering of sensor data frames can involve reconstructing the original sensor data frames (i.e. the obtained set of sensor data frames). This means generating sensor data frames from generally the same point-of-views. Alternatively, or in combination, the rendering of sensor data frames can involve rendering of novel viewpoints. Novel viewpoints herein refer to viewpoints different from those of the obtained sensor data frames. The subsequent rendering of sensor data frames will be further elaborated upon in connection with Fig. 2 below.

The transmitted S110 information indicative of the learned scene representation may e.g. be a set of learnable parameters (or weights) of the scene representation. The set of learnable parameters may then be used to form (or reconstruct) the learned scene representation at the remote server. The information indicative of the learned scene representation may further comprise additional information describing the scene representation, such as a scene representation identifier (e.g. for defining which scene representation (or which type of scene representation) the parameters belong to), or other data relating to the architecture of the scene representation. This additional information may serve the purpose in the reconstruction of the scene representation at the remote server. In some embodiments, the information indicative of the learned scene representation may be the entire learned scene representation itself.

The remote server herein refers to any remote (to the vehicle) computing entity, such as a fleet server or the like. The remote server can for instance be a centralized server at which further development of the ADS is performed.

The method 100 may further comprise generating S104 a perception output of the set of sensor data frames by processing the set of sensor data frames through a perception module of an automated driving system of the vehicle. The perception output may be any data outputted from the perception module, or any feature or function thereof, by processing the set of sensor data frames. The perception output may pertain to what objects have been detected in the surrounding environment, and how these relate to the ego-vehicle (i.e. the vehicle having collected the sensor data frames). The perception output may include the position, speed, and direction of nearby objects, position and type of road markings, position and type of traffic signs, and other relevant information. This data may then be used to help the ADS to make decisions on steering, acceleration, braking, and other actions necessary to safely navigate the environment. Accordingly, the term "perception" data may refer to "surroundings assessment" data, "spatial perception" data, "processed sensory" data and/or "temporal dependencies" data, whereas perception "data" may refer to perception "information" and/or "estimates". Generating the perception output by the perception module may refer to perception module/system adapted and/or configured to "estimate the surroundings of said vehicle", "estimate at least a portion of surroundings of said vehicle", "determine surroundings of said vehicle", "interpret sensory information relevant for the autonomous maneuvering of said vehicle", and/or "estimate surroundings of said vehicle and make model predictions of future states of the surroundings of said vehicle".

Forming S108 the learned scene representation may be further based on the perception output. In other words, the perception output may be used as further input to the forming S108 of the scene representation. Considering also the perception output in the forming of the scene representation, may provide for even more valuable information for the forming of the scene representation, in particular of dynamic objects in the surrounding environment, and how they act. The perception output can be further used to provide more valuable information about the scene, such as what obejcts are present, their position and size in space, etc.

Forming S108 the learned scene representation may be further based on map data associated with the surrounding environment. For example, data may be collected based on a geographical location of the vehicle, and provide additional information about static objects, or infrastructure in the surrounding environment, leading to an even better multidimensional representation of the scene.

The method 100 may further comprise storing S106 the sensor data sequence in the vehicle, and forming S108 the learned scene representation at later point in time. The scene representation may for instance be formed S106 once the vehicle has been parked, and more computational resources of the vehicle can be allocated.

As readily realized by the skilled person looking at the present disclosure, the proposed technology can be implemented in a distributed manner over two of more entities. As an example, the method 100 may be implemented by a system comprising a vehicle, and a server, such as the system 400 described below. This will be further elaborated upon below.

Executable instructions for performing these functions are, optionally, included in a non-transitory computer-readable storage medium or other computer program product configured for execution by one or more processors.

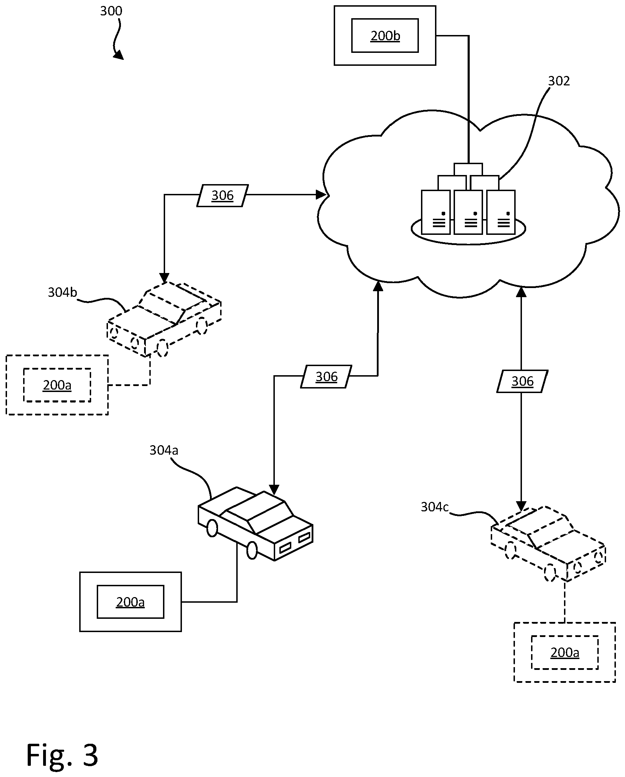

Fig. 2 illustrates, by way of example, a flowchart representation of a method 200 performed by a system in accordance with some embodiments. The system 300 herein comprises a server 302, and a fleet of vehicles 304a-c. The system 300 itself will be further described below in connection with Fig. 3.

The present flowchart representation can be seen as a description of the disclosed technology on a system level, i.e. how preforming of the different steps can be distributed over the system. In particular, the method 200 can be divided into a vehicle-part 200a performed in a vehicle, and a server part 200b performed by the server 302. When stated e.g. "vehicle is configured to ...", or "server configured to ...", it is herein meant that control circuitry of the vehicle/server is configured to perform the described function.

In the following, the different steps of the method 200 are described in more detail. The vehicle part 200a of the method 200 corresponds to the method 100 as described above in connection with Fig. 1. Thus, any aspects or principles of the method 100 described above, apply also to the vehicle part 200a of the method 200 currently described, and vice versa. To avoid undue repetition, reference will be made to the above.

Even though illustrated in a specific order, the steps of the method 200 may be performed in any suitable order as well as multiple times. Thus, although Fig. 2 may show a specific order of method steps, the order of the steps may differ from what is depicted. In addition, two or more steps may be performed concurrently or with partial concurrence. Such variation will depend on the software and hardware systems chosen and on designer choice. All such variations are within the scope of the invention. Likewise, software implementations could be accomplished with standard programming techniques with rule-based logic and other logic to accomplish the various steps. Further variants of the method 200 will become apparent from the present disclosure. The herein described embodiments are only given as examples and should not be limiting to the present invention. Other solutions, uses, objectives, and functions within the scope of the invention as claimed below described patent claims should be apparent for the person skilled in the art. It should be appreciated that the steps which are comprised in dashed lines in Fig. 2 are examples of a number of optional steps which may form part of a number of alternative embodiments. The optional steps need not be performed in order. Furthermore, it should be appreciated that not all of the optional steps need to be performed.

The method 200 comprises obtaining S202 (corresponding to step S102 of Fig. 1) a set of sensor data frames depicting a scene in a surrounding environment of a vehicle from at least two points-of-view. This may be performed by a vehicle of the fleet of vehicles.

Optionally, the method 200 may comprise generating S204 (corresponding to step S104 of Fig. 1) a perception output of the set of sensor data frames by processing the set of sensor data frames through a perception module of an automated driving system of the vehicle. This may be performed by the vehicle. The subsequent forming S208 of the learned scene representation (see below) may then further based on the perception output.

Optionally, the method 200 further comprises storing S206 (corresponding to step S106 of Fig. 1) the sensor data sequence in the vehicle. This may be performed by the vehicle. The subsequent step of forming S208 the learned scene representation may then be performed at a later point in time.

The method 200 further comprises forming S208 (corresponding to step S108 of Fig. 1), based on the set of sensor data frames, a learned scene representation of the depicted scene. The learned scene representation being a multidimensional representation of the depicted scene. This may be performed by the vehicle.

The method 200 further comprises transmitting S210 (corresponding to step S110 of Fig. 1) information indicative of the learned scene representation to the server. This may be performed by the vehicle. In addition, information indicative of a position and orientation associated with the obtained set of sensor data frames may be transmitted to the server. It may further involve information about which sensor configurations were used in obtaining the original set of sensor data frames.

Turning now to the server-part 200b of the method 200. The method 200 further comprises receiving S212 the information indicative of the learned scene representation from the vehicle. This may be performed by the server.

The method 200 further comprises forming S214 the learned scene representation based on the received information. This may be performed by the server. Forming S214 the learned scene representation based on the received information may involve reconstructing the learned scene representation (or a copy thereof) at the server. Or by simply setting up the learned scene representation for a subsequent rendering process, if the received information comprises the learned scene representation itself. Thus, the step of forming S214 the learned scene representation from the received information does not involve any learning (e.g. through training) of the scene representation, as in the case of forming S208 the learned scene representation from the set of sensor data frames, as performed by the vehicle. Instead, it can be described as reconstructing or setting up the already learned scene representation.

The method 200 further comprises rendering S216 sensor data frames pertaining to the surrounding environment, based on the learned scene representation. This may be performed by the server. The sensor data frames may be rendered using any rendering process suited for the learned scene representation.

The sensor data frames may be rendered S216 by generating a first set of sensor data frames comprising reconstructions of one or more sensor data frames of the obtained set of sensor data frames. Put differently, rendering of the sensor data frames may comprise reconstructing one or more of the original sensor data frames. This may be done, considering any information indicative of a position and orientation associated with the obtained set of sensor data frames, as well as information indicative of the sensor configuration used, as transmitted to the server.

Alternatively, or in combination, the sensor data frames may be rendered S216 by generating, by modifying the learned scene representation, a second set of sensor data frames pertaining to the surrounding environment, the second set of sensor data frames being different from the sensor data frames of the obtained set of sensor data frames. Put differently, rendering of the sensor data frames may constitute a generation of novel sensor data, different from the original sensor data. The original sensor data being the sensor data captured for the forming of the scene representation (i.e. captured by sensors of the vehicle). The second set of sensor data frames may be different from the obtained set of sensor data frames e.g. in that they depict the scene from other points-of-view. Moreover, the second set of sensor data frames may be different from the obtained set of sensor data frames in that they represent sensor data rendered for a different sensor data type, or captured by a sensor with a different specification. For example, if the original sensor data is captured by a traditional camera, the rendered sensor data may be for a fisheye camera. In another example, the second set of sensor data frames may depict a modified scene, e.g. by adding or removing objects, or by changing the position, orientation, or visual characteristics of existing objects in the scene. To render sensor data frames of a modified scene, parameters of the set of parameters associated with the learned scene representation can be modified.

Executable instructions for performing these functions are, optionally, included in a non-transitory computer-readable storage medium or other computer program product configured for execution by one or more processors.

Figure 3 illustrates, by way of example, a system 300 according to some embodiments. More specifically, a system 300 being configured to implement the principles of the presently disclosed technology. The system 300 should therefore be seen as a non-limiting example of a realization of the herein disclosed aspects of the present technology. For instance, the system 300 may be configured to perform the method 100 described in connection with Fig. 1, as well as the method 200 as described in connection with Fig. 2. Thus, any features or principles described above in connection with Fig. 1 and 2 are applicable also to the system 300 as described herein, and vice versa.

The system 300 comprises a server 302 (or remote, cloud, central, back-office, fleet, or back-end server), referred to in the following as the remote server 302 or just server 302. As illustrated, the server 302 may be provided in the cloud, i.e. as a cloud-implemented server. Advantageously, the server 302 may perform more computational heavy tasks, or manage and coordinate the fleet of vehicles (further described below), such as aggregating data from, or distributing data to, the different vehicles of the fleet, updating ADS functions and distributing the updates to the fleet, etc.

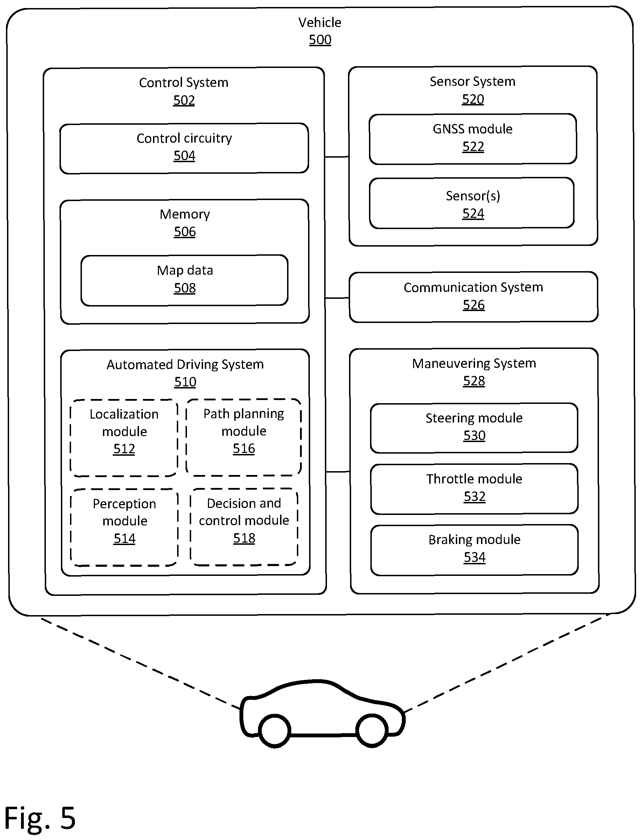

The system 300 further comprises one or more vehicles 304a-c, also referred to as a fleet of vehicles 304a-c. The one or more vehicles 304a-c may be vehicles 300 as described below in connection with Fig. 5. The one or more vehicles 304a-c may be configured to perform the method 100 described above in connection with Fig. 1. Thus, any principles and aspects described above in connection with Fig. 1 apply also to the vehicles 304a-c of the fleet of vehicles. The fleet illustrated in Fig. 3 comprises three vehicles, a first, second and third vehicle 304a-c, by way of example. The system 300 may however comprise any number of vehicles 304a-c. In the following, reference will mainly be made to the first vehicle 304a, however the same aspects apply also to the other vehicles of the fleet of vehicles.

The one or more vehicles 304a-c are communicatively connected to the remote server 302. This may provide for transmitting and/or receiving data 306 between the vehicles and the server. The one or more vehicles 304a-c may be further communicatively connected to each other. The data 306 may be any kind of data, such as communication signals, sensor data, information indicative of the learned scene representation, etc. The communication may be performed by any suitable wireless communication protocol. The wireless communication protocol may e.g. be long range communication protocols, such as cellular communication technologies (e.g. GSM, GPRS, EDGE, LTE, 5G, 5G NR, etc.) or short to midranged communication protocols, such as Wireless Local Area Network (WLAN) (e.g. IEEE 802.11) based solutions. The sever 302 comprises a suitable memory and control circuitry, for example, one or more processors or processing circuitry, as well as one or more other components such as a data interface and transceiver. The server 302 may also include software modules or other components, such that the control circuity can be configured to execute machine-readable instructions loaded from memory to implement the steps of the method to be performed.

As shown herein, the vehicles of the fleet of vehicles 304a-d are configured to perform the vehicle-part 200a of the method 200 as described above in connection with Fig. 2. In turn, the server 302 is configured to perform the server-part 200b of the method 200. In order to avoid unduly repetition, reference is made to the above.

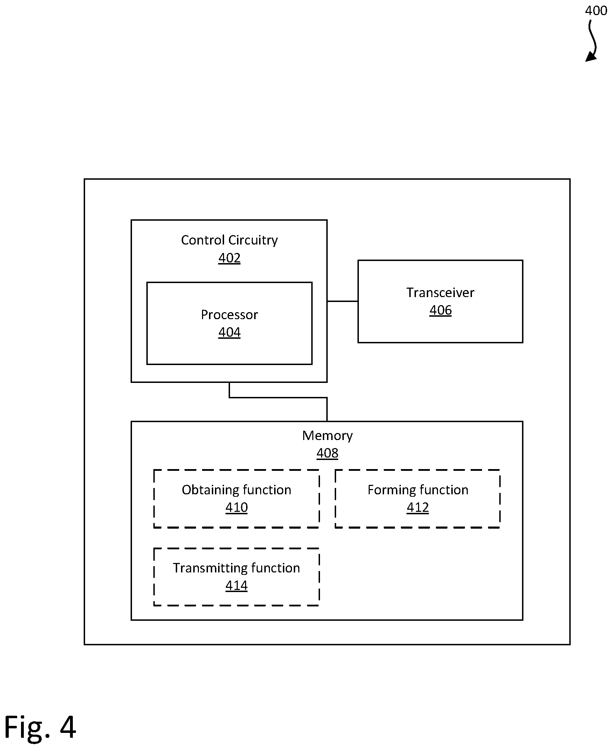

Figure 4 is a schematic illustration of a computing device 400 in accordance with some embodiments. The computing device 400 as described herein refers to any computer system, processing system or general computing device. Even though the computing device 400 is herein illustrated as one device, the computing device 400 may be a distributed computing system, formed by a number of different computational devices.

The computing device 400 comprises control circuitry 402. The control circuitry 402 may physically comprise one single circuitry device. Alternatively, the control circuitry 402 may be distributed over several circuitry devices.

As shown in the example of Fig. 4, the computing device 400 may further comprise a transceiver 406 and a memory 408. The control circuitry 402 being communicatively connected to the transceiver 406 and the memory 408. The control circuitry 402 may comprise a data bus, and the control circuitry 402 may communicate with the transceiver 406 and/or the memory 408 via the data bus.

The control circuitry 402 may be configured to carry out overall control of functions and operations of the computing device 400. The control circuitry 402 may include a processor 404, such as a central processing unit (CPU), microcontroller, or microprocessor. The processor 404 may be configured to execute program code stored in the memory 408, in order to carry out functions and operations of the computing device 400. The control circuitry 402 is configured to perform the steps of the method 100 as described above in connection with Fig. 1. The steps of the method 100 may be implemented in one or more functions stored in the memory 408.

The transceiver 406 is configured to enable the computing device 400 to communicate with other entities, such as vehicles or servers. The transceiver 406 may both transmit data from and receive data to the computing device 400.

The memory 408 may be a non-transitory computer-readable storage medium. The memory 408 may be one or more of a buffer, a flash memory, a hard drive, a removable media, a volatile memory, a non-volatile memory, a random-access memory (RAM), or another suitable device. In a typical arrangement, the memory 408 may include a non-volatile memory for long-term data storage and a volatile memory that functions as system memory for the computing device 400. The memory 408 may exchange data with the circuitry 402 over the data bus. Accompanying control lines and an address bus between the memory 408 and the circuitry 402 also may be present.

Functions and operations of the computing device 400 may be implemented in the form of executable logic routines (e.g., lines of code, software programs, etc.) that are stored on a non-transitory computer readable recording medium (e.g., the memory 408) of the computing device 400 and are executed by the circuitry 402 (e.g., using the processor 404). Put differently, when it is stated that the circuitry 402 is configured to execute a specific function, the processor 404 of the circuitry 402 may be configured execute program code portions stored on the memory 408, wherein the stored program code portions correspond to the specific function. Furthermore, the functions and operations of the circuitry 402 may be a stand-alone software application or form a part of a software application that carries out additional tasks related to the circuitry 402. The described functions and operations may be considered a method that the corresponding device is configured to carry out, such as the method 100 discussed above in connection with Fig. 1. In addition, while the described functions and operations may be implemented in software, such functionality may as well be carried out via dedicated hardware or firmware, or some combination of one or more of hardware, firmware, and software. In the following, the function and operations of the computing device 400 is described.

The control circuitry 402 is configured to obtain a set of sensor data frames depicting a scene in a surrounding environment of a vehicle from at least two points-of-view. This may e.g. be performed by execution of an obtaining function 410.

The control circuitry 402 is further configured to form, based on the set of sensor data frames, a learned scene representation of the depicted scene. The learned scene representation being a multidimensional representation of the depicted scene. This may e.g. be performed by execution of a forming function 412.

The control circuitry 402 is further configured to transmit information indicative of the learned scene representation to a remote server for subsequent use of the learned scene representation in reconstructing one or of more sensor data frames the obtained set of sensor data frames and/or rendering of new sensor data frames. This may e.g. be performed by execution of a transmitting function 414.

It should be noted that the principles, features, aspects, and advantages of the method 100 as described above in connection with Fig. 1, are applicable also to the computing device 400 as described herein. In order to avoid undue repetition, reference is made to the above.

Figure 5 is a schematic illustration of a vehicle 500 in accordance with some embodiments. The vehicle 500 is equipped with an Automated Driving System (ADS) 510. As used herein, a "vehicle" is any form of motorized transport. For example, the vehicle 500 may be any road vehicle such as a car (as illustrated herein), a motorcycle, a (cargo) truck, a bus, a smart bicycle, etc.

The herein disclosed vehicle 500 is configured to perform the method 100 as described above in connection with Fig. 1. This may e.g. be performed by control circuitry 504 of the vehicle (further described below). Seen differently, the vehicle 500 may comprise the computing device 400 as described above in connection with Fig. 4. The computing device 400 may be integrated in the vehicle, e.g. as part of the control system 502 of the vehicle. The computing device 400 may share its control circuitry 402 with the control circuitry 504 of the vehicle 500.

The vehicle 500 comprises a number of elements which can be commonly found in autonomous or semiautonomous vehicles. It will be understood that the vehicle 500 can have any combination of the various elements shown in Fig. 5. Moreover, the vehicle 500 may comprise further elements than those shown in Fig. 5. While the various elements are herein shown as located inside the vehicle 500, one or more of the elements can be located externally to the vehicle 500. Further, even though the various elements are herein depicted in a certain arrangement, the various elements may also be implemented in different arrangements, as readily understood by the skilled person. It should be further noted that the various elements may be communicatively connected to each other in any suitable way. The vehicle 500 of Fig. 5 should be seen merely as an illustrative example, as the elements of the vehicle 500 can be realized in several different ways.

The vehicle 500 comprises a control system 502. The control system 502 is configured to carry out overall control of functions and operations of the vehicle 500. The control system 502 comprises control circuitry 504 and a memory 506. The control circuitry 502 may physically comprise one single circuitry device. Alternatively, the control circuitry 502 may be distributed over several circuitry devices. As an example, the control system 502 may share its control circuitry 504 with other parts of the vehicle. The control circuitry 502 may comprise one or more processors, such as a central processing unit (CPU), microcontroller, or microprocessor. The one or more processors may be configured to execute program code stored in the memory 506, in order to carry out functions and operations of the vehicle 500. The processor(s) may be or include any number of hardware components for conducting data or signal processing or for executing computer code stored in the memory 506. In some embodiments, the control circuitry 504, or some functions thereof, may be implemented on one or more so-called system-on-a-chips (SoC). As an example, the ADS 510 may be implemented on a SoC. The memory 506 optionally includes high-speed random-access memory, such as DRAM, SRAM, DDR RAM, or other random-access solid-state memory devices; and optionally includes non-volatile memory, such as one or more magnetic disk storage devices, optical disk storage devices, flash memory devices, or other non-volatile solid-state storage devices. The memory 506 may include database components, object code components, script components, or any other type of information structure for supporting the various activities of the present description.

In the illustrated example, the memory 506 further stores map data 508. The map data 508 may for instance be used by the ADS 510 of the vehicle 500 in order to perform autonomous functions of the vehicle 500. The map data 508 may comprise high-definition (HD) map data. It is contemplated that the memory 508, even though illustrated as a separate element from the ADS 510, may be provided as an integral element of the ADS 510. In other words, according to some embodiments, any distributed or local memory device may be utilized in the realization of the present inventive concept. Similarly, the control circuitry 504 may be distributed e.g. such that one or more processors of the control circuitry 504 is provided as integral elements of the ADS 510 or any other system of the vehicle 500. In other words, according to an exemplary embodiment, any distributed or local control circuitry device may be utilized in the realization of the present inventive concept.

The vehicle 500 further comprises a sensor system 520. The sensor system 520 is configured to acquire sensory data about the vehicle itself, or of its surroundings. The sensor system 520 may for example comprise a Global Navigation Satellite System (GNSS) module 522 (such as a GPS) configured to collect geographical position data of the vehicle 500. The sensor system 520 may further comprise one or more sensors 524. The one or more sensor(s) 524 may be any type of on-board sensors, such as cameras, LIDARs and RADARs, ultrasonic sensors, gyroscopes, accelerometers, odometers etc. It should be appreciated that the sensor system 520 may also provide the possibility to acquire sensory data directly or via dedicated sensor control circuitry in the vehicle 500.

The vehicle 500 further comprises a communication system 526. The communication system 526 is configured to communicate with external units, such as other vehicles (i.e. via vehicle-to-vehicle (V2V) communication protocols), remote servers (e.g. cloud servers, as shown above in connection with Fig. 4), databases or other external devices, i.e. vehicle-to-infrastructure (V2I) or vehicle-to-everything (V2X) communication protocols. The communication system 526 may communicate using one or more communication technologies. The communication system 526 may comprise one or more antennas. Cellular communication technologies may be used for long-range communication such as to remote servers or cloud computing systems. In addition, if the cellular communication technology used have low latency, it may also be used for V2V, V2I or V2X communication. Examples of cellular radio technologies are GSM, GPRS, EDGE, LTE, 5G, 5G NR, and so on, also including future cellular solutions. However, in some solutions mid to short-range communication technologies may be used such as Wireless Local Area (LAN), e.g. IEEE 802.11 based solutions, for communicating with other vehicles in the vicinity of the vehicle 500 or with local infrastructure elements. ETSI is working on cellular standards for vehicle communication and for instance 5G is considered as a suitable solution due to the low latency and efficient handling of high bandwidths and communication channels.

The communication system 526 may further provide the possibility to send output to a remote location (e.g. remote operator or control center) by means of the one or more antennas. Moreover, the communication system 526 may be further configured to allow the various elements of the vehicle 500 to communicate with each other. As an example, the communication system may provide a local network setup, such as CAN bus, I2C, Ethernet, optical fibers, and so on. Local communication within the vehicle may also be of a wireless type with protocols such as WiFi, LoRa, Zigbee, Bluetooth, or similar mid/short range technologies.

The vehicle 500 further comprises a maneuvering system 520. The maneuvering system 528 is configured to control the maneuvering of the vehicle 500. The maneuvering system 528 comprises a steering module 530 configured to control the heading of the vehicle 500. The maneuvering system 528 further comprises a throttle module 532 configured to control actuation of the throttle of the vehicle 500. The maneuvering system 528 further comprises a braking module 534 configured to control actuation of the brakes of the vehicle 500. The various modules of the steering system 528 may receive manual input from a driver of the vehicle 500 (i.e. from a steering wheel, a gas pedal and a brake pedal respectively). However, the maneuvering system 528 may be communicatively connected to the ADS 510 of the vehicle, to receive instructions on how the various modules should act. Thus, the ADS 510 can control the maneuvering of the vehicle 500.

As stated above, the vehicle 500 comprises an ADS 510. The ADS 510 may be part of the control system 502 of the vehicle. The ADS 510 is configured to carry out the functions and operations of the autonomous functions of the vehicle 500. The ADS 510 can comprise a number of modules, where each module is tasked with different functions of the ADS 510.

The ADS 510 may comprise a localization module 512 or localization block/system. The localization module 512 is configured to determine and/or monitor a geographical position and heading of the vehicle 500, and may utilize data from the sensor system 520, such as data from the GNSS module 522. Alternatively, or in combination, the localization module 512 may utilize data from the one or more sensors 524. The localization system may alternatively be realized as a Real Time Kinematics (RTK) GPS in order to improve accuracy.

The ADS 510 may further comprise a perception module 514 or perception block/system. The perception module 514 may refer to any commonly known module and/or functionality, e.g. comprised in one or more electronic control modules and/or nodes of the vehicle 500, adapted and/or configured to interpret sensory data - relevant for driving of the vehicle 500 - to identify e.g. obstacles, vehicle lanes, relevant signage, appropriate navigation paths etc. The perception module 514 may thus be adapted to rely on and obtain inputs from multiple data sources, such as automotive imaging, image processing, computer vision, and/or in-car networking, etc., in combination with sensory data e.g. from the sensor system 520.

An object detection model for detecting and/or classifying object in the surrounding environment of the vehicle 500 (or other types of machine learning models) may be part of the ADS 510, or more specifically part of the perception module 514. Such models may be a local copy of a global model managed by a remote (of fleet) server, i.e. as part of a federated learning scheme.

The localization module 512 and/or the perception module 514 may be communicatively connected to the sensor system 520 in order to receive sensor data from the sensor system 520. The localization module 512 and/or the perception module 514 may further transmit control instructions to the sensor system 520.

The ADS may further comprise a path planning module 516. The path planning module 516 is configured to determine a planned path of the vehicle 500 based on a perception and location of the vehicle as determined by the perception module 514 and the localization module 512 respectively. A planned path determined by the path planning module 516 may be sent to the maneuvering system 528 for execution.

The ADS may further comprise a decision and control module 518. The decision and control module 518 is configured to perform the control and make decisions of the ADS 510. For example, the decision and control module 518 may decide on whether the planned path determined by the path-planning module 516 should be executed or not.

It should be understood that parts of the described solution may be implemented either in the vehicle 500, in a server located external to the vehicle, or in a combination of internal and external to the vehicle; for instance, in a server in communication with the vehicle, a so-called cloud solution, as explained above, e.g. in connection with Fig. 3. The different features and steps of the embodiments may be combined in other combinations than those described. Further, the elements of the vehicle 500 (i.e. the systems and modules) may be implemented in different combinations than those described herein.

The present invention has been presented above with reference to specific embodiments. However, other embodiments than the above described are possible and within the scope of the invention. Different method steps than those described above, performing the methods by hardware or software, may be provided within the scope of the invention. Thus, according to an exemplary embodiment, there is provided a non-transitory computer-readable storage medium storing one or more programs configured to be executed by one or more processors of a vehicle control system, the one or more programs comprising instructions for performing the methods according to any one of the abovediscussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

Generally speaking, a computer-accessible medium may include any tangible or non-transitory storage media or memory media such as electronic, magnetic, or optical media-e.g., disk or CD/DVD-ROM coupled to computer system via bus. The terms "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link.

It should be noted that any reference signs do not limit the scope of the claims, that the invention may be at least in part implemented by means of both hardware and software, and that the same item of hardware may represent several "means" or "units".

## Claims

1. A computer-implemented method (100) performed in a vehicle, the method (100) comprising:
obtaining (S102) a set of sensor data frames depicting a scene in a surrounding environment of the vehicle from at least two points-of-view;
forming (S108) a learned scene representation of the depicted scene, based on the obtained set of sensor data frames, wherein the learned scene representation is a multidimensional representation of the depicted scene; and
transmitting (S110) information indicative of the learned scene representation to a remote server for subsequent rendering of sensor data frames based on the learned scene representation.

2. The method according to claim 1, wherein the set of sensor data frames constitutes a sequence of sensor data captured over at least two subsequent points-in-time, and
wherein the learned scene representation is a spatiotemporal representation.

3. The method (100) according to claim 1 or 2, wherein the learned scene representation is a Neural Radiance Field.

4. The method (100) according to any one of the claims 1 to 3, further comprising, storing (S106) the sensor data sequence in the vehicle, and forming (S108) the learned scene representation later point in time.

5. The method (100) according to any one of the claims 1 to 4, wherein forming (S108) the learned scene representation comprises training (S108a) the learned scene representation on the set of sensor data frames, thereby learning a set of parameters of the learned scene representation.

6. The method (100) according to any one of the claims 1 to 5, wherein forming (S108) the learned scene representation comprises processing (S108b) the set of sensor data frames through a machine learning model, the machine learning model being trained to process a set of sensor data frames and output a predicted set of parameters for the learned scene representation.

7. The method (100) according to any one of the claims 1 to 6, wherein each sensor data frame of the set of sensor data frames is associated with a position within a frame of reference, at a time of capture.

8. The method (100) according to any one of the claims 1 to 7, wherein the method (100) further comprises generating (S104) a perception output of the set of sensor data frames by processing the set of sensor data frames through a perception module of an automated driving system of the vehicle, and
wherein forming (S108) the learned scene representation is further based on the perception output.

9. The method (100) according to any one of the claims 1 to 8, wherein forming (S108) the learned scene representation is further based on map data associated with the surrounding environment.

10. The method (100) according to any one of the claims 1 to 9, wherein the set of sensor data frames is obtained in response to a fulfillment of an event trigger.

11. A computer program product comprising instructions which, when the program is executed by a computer, causes the computer to carry out the method (100) according to any one of claims 1-10.

12. A computing device (400) comprising control circuitry (402) configured to:
obtain a set of sensor data frames depicting a scene in a surrounding environment of a vehicle from at least two points-of-view;
form, based on the set of sensor data frames, a learned scene representation of the depicted scene, wherein the learned scene representation is a multidimensional representation of the depicted scene;and
transmit information indicative of the learned scene representation to a remote server for subsequent use of the learned scene representation in reconstructing one or more sensor data frames of the obtained set of sensor data frames and/or rendering of new sensor data frames.

13. A vehicle (500) comprising one or more sensors (524), and the computing device (400) according to claim 12.

14. A system (300) comprising:
a fleet of vehicles (304a-c); and
a server (302) communicatively connected to the fleet of vehicles (304a-c);
wherein a vehicle of the fleet of vehicles (304a-c) comprises control circuitry configured to:
obtain a set of sensor data frames depicting a scene in a surrounding environment of a vehicle from at least two points-of-view;
form, based on the set of sensor data frames, a learned scene representation of the depicted scene, wherein the learned scene representation is a multidimensional representation of the depicted scene; and
transmit information indicative of the learned scene representation to the server,
wherein the server (302) comprises control circuitry configured to:
receive the information indicative of the learned scene representation from the vehicle;
form the learned scene representation based on the received information; and
render sensor data frames pertaining to the surrounding environment, based on the learned scene representation.

15. The system according to claim 14, wherein the control circuitry is configured to render the sensor data frames by:
generating a first set of sensor data frames comprising reconstructions of one or more sensor data frames of the obtained set of sensor data frames, and/or
generating, by modifying the learned scene representation, a second set of sensor data frames pertaining to the surrounding environment, the second set of sensor data frames being different from the sensor data frames of the obtained set of sensor data frames.
